# FASCICULE DE BREVET EUROPEEN

(11) **EP 0 604 630 B1**
(45) Date de publication et mention de la délivrance du brevet: **10.12.1997**
(21) Numéro de dépôt: 93916019.8
(22) Date de dépôt: 20.07.1993
(51) Int. Cl.: G08G 1/123

(54) **DISPOSITIF POUR INFORMER LES USAGERS DES TRANSPORTS URBAINS**
INFORMATIONSEINRICHTUNG FÜR BENUTZER DES ÖFFENTLICHEN NAHVERKEHRS.
URBAN TRANSPORT USER INFORMATION SYSTEM

(30) Priorité: 22.07.1992 FR 9209042
(43) Date de publication de la demande: 06.07.1994
(73) Titulaire: Decaux, Jean-Claude, F-92200 Neuilly sur Seine (FR)
(72) Inventeur: LEWINER, Jacques, F-92210 Saint-Cloud (FR); CARREEL, Eric, F-75015 Paris (FR)
(74) Mandataire: Burbaud, Eric
(86) Numéro de dépôt international: FR9300739
(87) Numéro de publication internationale: WO9402923

(56) Documents cités:
- EP-A- 0 451 756
- FR-A- 2 185 824
- FR-A- 2 556 864
- US-A- 4 713 661
- PATENT ABSTRACTS OF JAPAN vol. 14, no. 105 (E-895)26 Février 1990

## Description

L'invention est relative aux dispositifs pour informer les usagers des transports en commun urbains sur les positions réelles à chaque instant des véhicules de transport qu'ils se proposent d'emprunter.

Les véhicules ici concernés sont plus particulièrement les véhicules de transport en commun urbains automobiles de surface et seront désignés par le mot "autobus" dans la suite de l'exposé.

On rappelle qu'il n'est en général pas possible de prévoir avec exactitude les instants de passage des autobus desservant une ligne donnée d'un réseau de transport urbain en chacun des arrêts ou stations de cette ligne.

Si en effet les instants où les différents autobus quittent la gare de départ de la ligne peuvent être déterminés avec précision, on ne peut connaître à l'avance quelles seront les difficultés qui s'opposeront à la progression de chaque autobus le long de la ligne considérée, en raison essentiellement de la formation imprévisible de "bouchons" plus ou moins denses sur cette ligne, susceptibles de ralentir la circulation, voire de la bloquer provisoirement.

Les usagers qui se présentent à l'un des différents arrêts de la ligne en vue d'emprunter l'un des autobus qui la desservent ne savent donc en général pas quelle sera la durée d'attente du prochain autobus de passage.

Ils en sont donc réduits à attendre ce prochain passage sans savoir si la durée de leur attente sera courte ou non.

Cette ignorance constitue un inconvénient sérieux des transports en commun urbains de surface.

En effet, de peur d'être obligés d'attendre l'autobus pendant une longue période, pouvant atteindre ou même dépasser le quart d'heure, parfois dans des conditions d'inconfort relatives dont on peut citer la station debout et l'exposition aux intempéries, de nombreux usagers potentiels adoptent un mode de transport différent, tel que le métropolitain ou le taxi, en regrettant de ne pouvoir bénéficier des avantages du transport en surface tel que l'agrément du voyage associé à l'économie.

Pour remédier à cet inconvénient, il a déjà été prévu d'afficher dans certaines stations d'autobus des indications relatives à la durée d'attente du prochain autobus de passage.

C'est là un progrès certain.

Mais pour avoir connaissance d'une telle information, l'usager doit obligatoirement se rendre à la station ainsi perfectionnée.

La connaissance qu'il acquiert alors du temps d'attente du prochain autobus est certainement intéressante en ce qu'elle l'aide à prendre patience si ce temps est long.

Mais elle perd beaucoup de son intérêt du fait qu'il n'est alors pratiquement plus loisible à l'usager de modifier l'emploi de son temps, l'éventail des activités qu'il peut déployer sur place étant en général extrêmement limité.

Pour remédier à ce nouvel inconvénient, il a déjà été proposé de mettre à la disposition des usagers des autobus d'un réseau des boîtiers portatifs comprenant, entre autres, des moyens d'affichage du temps d'attente relatif aux autobus à emprunter (voir document EP-A-0 451 756).

Cette formule présente de l'intérêt.

Mais, dans les réalisations proposées, chaque boîtier est affecté à un arrêt unique d'autobus, de sorte que le problème de l'information de l'usager n'est résolu que partiellement.

C'est ainsi que, par exemple, le boîtier portatif permet de renseigner à distance l'usager sur le temps d'attente des autobus à la station usuelle de départ de ses déplacements en autobus, station généralement voisine de son domicile, si l'on suppose le boîtier affecté à cette station.

Mais il ne peut lui donner aucune information sur les temps d'attente d'autobus desservant les autres stations du réseau.

Or, c'est souvent pour le trajet de retour de l'usager que l'information en question serait la plus précieuse, cette information lui permettant en particulier de prolonger de quelques minutes certaines activités hors domicile telles que l'examen de marchandises proposées à la vente dans un magasin, examen éventuellement associé à la consultation d'un spécialiste.

En plus de cette limitation des performances, due au fait que chaque boîtier est affecté à un arrêt unique d'autobus, les systèmes d'information proposés jusqu'à ce jour présentent l'inconvénient d'une gestion lourde et donc lente, rendant difficile une mise à jour précise des données affichées, et ce pour les raisons exposées ci-après.

Dans lesdits systèmes, les informations transmises par voie électromagnétique et exploitées par les arrêts d'autobus et par les boîtiers portatifs affectés à ces arrêts sont les mêmes et sont élaborées par un même ensemble appelé à desservir respectivement la totalité des différents arrêts du réseau considéré, chacune desdites informations étant associée à une adresse codée représentative de l'un de ces arrêts.

Les récepteurs compris respectivement par une station d'arrêt donnée et par les boîtiers affectés à cette station sont donc du même type, la principale différence entre ces deux récepteurs résidant en ce que l'un est fixe alors que l'autre est portatif.

Les informations adressées en question concernent en particulier les temps d'attente approximatifs des deux "prochains autobus" attendus à l'arrêt concerné : les récepteurs, fixes ou portatifs, localisés à cet arrêt ou au voisinage de celui-ci, n'ont alors plus qu'à décoder et à afficher ces temps d'attente.

Une telle gestion est relativement lourde puisqu'elle implique :
- pour les différents signaux transmis successivement par voie électromagnétique un nombre très élevé, lequel est égal en principe au nombre total N des arrêts compris par l'ensemble du réseau considéré,
- et, pour chaque signal "adressé" à un arrêt donné un grand nombre P d'unités d'information composantes (généralement "unités binaires d'information" ou "bits"), chaque signal devant fournir par exemple des données suffisantes pour identifier les temps d'attente des deux prochains autobus à l'arrêt concerné.

Le nombre total NP des unités d'information à transmettre par voie électromagnétique selon les solutions connues est donc très élevé, ce qui présente l'inconvénient de nécessiter une longue durée ou un débit élevé pour la transmission de la totalité des informations utiles au réseau.

La longue durée signifie une longue période de renouvellement de ladite transmission, laquelle est de préférence renouvelée cycliquement : il résulte de la longueur de cette période un temps de réponse élevé de l'ensemble, et donc des mises à jour très tardives des informations à afficher, ce qui peut être rédhibitoire si les retards observés atteignent ou dépassent la minute.

Le débit élevé signifie qu'il est difficile d'utiliser pour la transmission ici considérée les bandes "latérales" laissées disponibles par les émissions radiophoniques urbaines, ces bandes étant trop étroites pour des débits de transmission trop élevés.

L'invention a pour but, surtout, de remédier à ces inconvénients, et en particulier :
- de proposer des boîtiers portatifs "universels", c'est-à-dire aptes à sélectionner et à afficher les temps d'attente d'autobus correspondant à n'importe quelle station du réseau considéré,
- et pour cela, de réduire fortement le nombre des unités d'information composant la totalité des signaux d'information utiles du réseau et donc, d'une part, la durée de leur transmission électromagnétique et le temps de réponse de l'ensemble, qui en découle et, d'autre part, la largeur nécessaire pour les bandes des canaux de transmission.

A cet effet, les dispositifs d'information du genre en question selon l'invention comprennent encore, d'une part, un ensemble de gestion comportant des moyens pour recueillir des données identifiant les positions instantanées des différents autobus qui circulent sur les différentes lignes du réseau, des moyens pour élaborer à partir de ces données des signaux électriques d'information sur lesdites positions et des moyens pour émettre ces signaux par voie électromagnétique, et, d'autre part, une pluralité de récepteurs, dont certains portatifs, comprenant chacun des moyens pour recevoir lesdits signaux et sélectionner certains d'entre eux présentant une relation avec un arrêt donné et des moyens, exploitant les signaux ainsi sélectionnés, pour afficher des informations relatives aux temps d'attente des autobus audit arrêt, et ils sont essentiellement caractérisés en ce que, d'une part, chacun des signaux électriques d'information émis par voie électromagnétique est affecté à un autobus donné et lié à la distance entre cet autobus et un arrêt de la ligne correspondante et en ce que, d'autre part, les récepteurs portatifs se présentent sous la forme de boîtiers comprenant, d'une part, des moyens d'interrogation actionnables par les usagers, propres à identifier un arrêt donné quelconque du réseau, et d'autre part, des moyens propres à asservir les sélections des signaux électriques ci-dessus à ces interrogations et à alimenter à l'aide des signaux ainsi sélectionnés, successivement, des moyens de calcul des temps d'attente à afficher et les moyens d'affichage de ces temps.

Dans des modes de réalisation préférés, on a recours en outre à l'une et/ou à l'autre des dispositions suivantes :
- les signaux émis par voie électromagnétique forment une suite de signaux qui est émise cycliquement et chaque boîtier portatif comprend des moyens de mémoire qui sont prévus de façon à enregistrer les données relatives au cycle d'émission complet qui précède chaque instant de façon telle que celles, de ces données, qui correspondent à chaque interrogation, puissent être instantanément disponibles dès cette interrogation,
- les signaux émis par voie électromagnétique sont rendus secrets par un chiffrage approprié et les boîtiers récepteurs portatifs comprennent des moyens pour décrypter certains au moins de ces signaux.

L'invention vise également les boîtiers récepteurs portatifs compris par les dispositifs d'information ci-dessus.

Elle comprend en outre, mises à part les dispositions principales explicitées ci-dessus, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière bien entendu non limitative.

La figure 1, de ce dessin, montre très schématiquement le plan partiel d'un réseau d'autobus ainsi qu'une installation d'information des usagers des autobus de ce réseau, installation établie selon l'invention.

La figure 2 montre schématiquement un boîtier récepteur portatif compris par une telle installation.

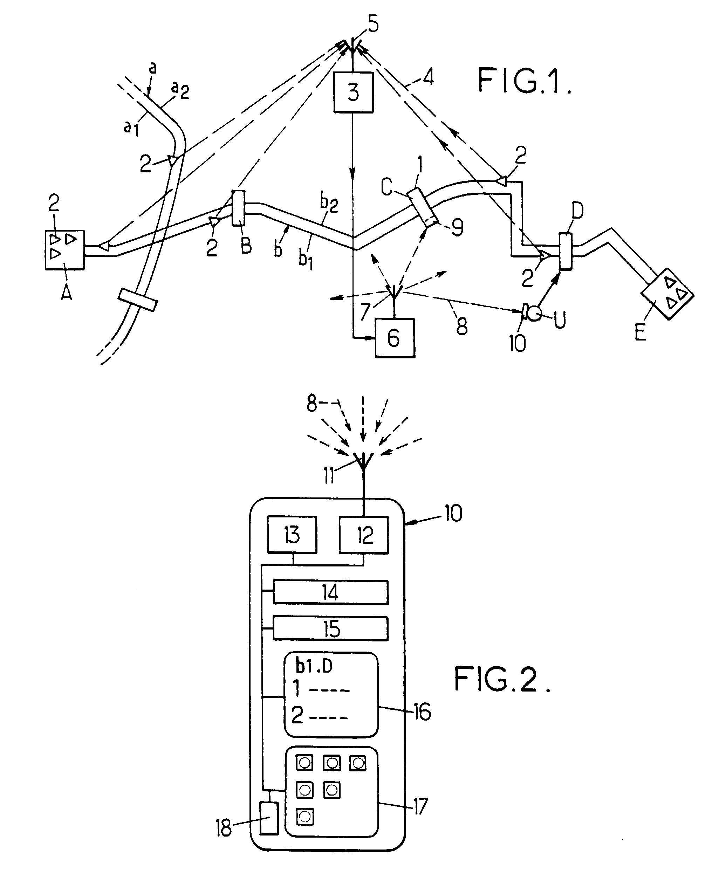

La portion de réseau d'autobus représentée sur la figure 1 fait apparaître deux lignes de ce réseau, désignées respectivement par les références a et b et comprenant chacune deux "trajets" ou "parcours" de sens opposés (respectivement a₁ et a₂ ; b₁ et b₂).

A titre d'exemple, le trajet b₁ de la ligne b s'étend d'une gare de départ A à une gare d'arrivée E et comporte successivement trois stations intermédiaires ou "arrêts" 1 plus particulièrement désignés ici par les lettres B, C et D.

Bien entendu, dans la réalité, le nombre N des arrêts correspondant à chaque ligne d'autobus est largement supérieur à trois et généralement de l'ordre de plusieurs dizaines.

Les autobus qui desservent les différentes lignes du réseau sont représentés par des petits triangles 2 orientés dans le sens de leur progression.

Ici encore, le nombre n des autobus desservant chaque ligne a été fortement minoré dans un souci de clarté.

Mais ce nombre n d'autobus est toujours très inférieur au nombre N des stations desservies.

Le rectangle 3 désigne un poste central de gestion du réseau.

Des moyens schématisés par les traits discontinus 4 sont prévus pour élaborer et faire parvenir au poste 3 des informations i permettant d'identifier les positions réelles des différents autobus 2 à chaque instant.

Chaque information i comporte une "adresse" a affectée à l'autobus considéré, adresse comprenant elle-même des données propres à identifier le "trajet" emprunté par cet autobus.

Ces moyens sont établis de toute façon désirable.

Par exemple, ils peuvent être réalisés par des comptes rendus téléphoniques adressés par les conducteurs des autobus au poste 3.

Mais on préfère en général adopter des moyens automatiques excluant toute intervention des conducteurs d'autobus et mettant en oeuvre des liaisons hertziennes entre des émetteurs montés sur lesdits autobus et le poste 3.

Ce poste 3 comprend des moyens de mémoire dans lesquels sont enregistrées des données permettant d'identifier les différentes lignes du réseau ainsi que les différentes stations d'arrêt 1 comprises par chacune de ces lignes.

Le poste 3 comprend également des moyens de calcul permettant de comparer à chaque instant, d'une part, chaque information i propre à identifier la localisation d'un autobus donné 2 d'adresse α et, d'autre part, les données enregistrées dans les moyens de mémoire, de façon à élaborer un signal électrique s représentant la distance entre ledit autobus 2 et l'arrêt ou station 1 "suivant" appelé à être desservi par cet autobus.

L'ensemble des signaux électriques s ainsi élaborés sont transmis du poste 3 à un émetteur 6 comprenant une antenne émettrice 7, à partir de laquelle ils sont émis dans l'espace sous la forme d'ondes électromagnétiques.

Ces ondes sont schématisées par les traits discontinus 8 sur les figures 1 et 2.

Un certain nombre de récepteurs sont agencés de façon à recevoir et à exploiter les signaux 8 ainsi émis.

Certains de ces récepteurs 9 peuvent être fixes et destinés à équiper les arrêts 1.

D'autres récepteurs 10 sont portatifs et mis à la disposition des usagers.

Alors que les récepteurs fixes 9 sont affectés exclusivement à l'information des usagers qui fréquentent les arrêts 1 équipés par ces récepteurs, de façon à renseigner ces usagers sur les temps d'attente des prochains autobus à ces arrêts, les récepteurs 10 sont plus universels, étant agencés de façon à informer les usagers sur les temps d'attente des prochains autobus à n'importe quel arrêt du réseau, et ce en réponse à des interrogations appropriées des usagers.

Chaque récepteur portatif 10 comprend :
- une antenne 11 associée à un dispositif de réception 12 de signaux électromagnétiques,
- un circuit 13 de décodage de ces signaux,
- un circuit de mémoire 14,
- un microprocesseur 15,
- un dispositif 16 d'affichage de données, comprenant notamment un écran vidéo,
- un dispositif d'interrogation 17, comprenant généralement un clavier à touches,
- et une source de courant électrique 18, habituellement constituée par une pile.

L'ensemble de ces composants est agencé de façon à rendre possible le fonctionnement suivant.

L'usager U (figure 1) détenteur du boîtier 10 désire connaître quels seront les temps d'attente des prochains autobus à un arrêt 1 que l'on supposera ici être l'arrêt D du trajet b₁ ci-dessus.

Il actionne le clavier 17 (figure 2) en enfonçant successivement les touches, de ce clavier, qui correspondent aux caractères b, 1 et D.

Cette simple interrogation fait immédiatement apparaître sur l'écran 16 des indications relatives aux temps d'attente, à la station D, des deux "prochains autobus" appelés à desservir cette station.

Cet affichage peut être effectué de toute manière désirable, par exemple en faisant apparaître en clair les temps considérés, chiffrés en minutes et secondes.

Pour obtenir un tel résultat, le microprocesseur 15 est agencé de façon à sélectionner automatiquement, en réponse à l'interrogation "b1D" ci-dessus définie, parmi les signaux 8 reçus à l'antenne 11, ceux qui correspondent aux deux autobus, desservant le trajet b₁, qui se trouvent immédiatement en amont de la station D.

Les informations qui sont reçues à cet égard à partir de l'émetteur 6 correspondent aux distances qui séparent ces deux autobus de la station D.

Selon une variante intéressante, les distances déductibles desdites informations reçues peuvent être les "distances-mères" qui séparent chaque autobus de la gare de départ A : la distance entre chaque autobus et la "prochaine station" D desservie par lui est facilement calculée à partir de cette distance-mère en soustrayant cette dernière d'une constante qui est la distance fixe entre la gare de départ et la "prochaine station" considérée.

Les moyens de calcul compris par le microprocesseur 15 sont prévus pour déduire des distances ci-dessus les temps d'attente à afficher.

A cet effet, ils font intervenir un paramètre qui est lié à la vitesse moyenne de progression des autobus sur le trajet considéré, paramètre qui peut être une constante déterminée une fois pour toutes ou une variable se rapprochant davantage de la réalité et déterminable de toute manière désirable.

Il est à noter que l'interrogation du boîtier 10 n'est absolument pas limitée à des consultations concernant l'arrêt D de la ligne b.

Bien au contraire, cette consultation peut concerner n'importe lequel des différents arrêts 1 compris par les différentes lignes du réseau.

Il est à noter également que, dans les modes de réalisation préférés, l'ensemble des informations transmises par voie électromagnétique à partir de l'émetteur 6 et schématisées en 8 sur le dessin comportent un nombre total d'unités d'information relativement faible.

Ce nombre est en effet lié non plus à celui N de l'ensemble des stations ou arrêts compris par les différentes lignes du réseau, mais à celui n des autobus 2 qui circulent sur ces lignes, nombre qui est généralement inférieur d'au moins trois ou quatre fois au nombre N.

De plus les informations liées à chacun des autobus 2 considérés concernent exclusivement leur position propre, laquelle peut être définie par leur distance avec l'arrêt suivant à desservir de la ligne sur laquelle ils circulent ou avec la gare de départ de la ligne, selon la variante explicitée ci-dessus.

Cette information peut être exprimée par un nombre p d'unités d'information inférieur à celui P nécessaire pour identifier les positions de plusieurs autobus par rapport à un arrêt donné.

Il résulte de ce qui précède que le nombre total np des unités d'information à transmettre par voie électromagnétique est ici beaucoup plus faible que dans le cadre des sytèmes d'information antérieurement connus, ce qui permet de réduire la durée totale de leur transmission intégrale, et donc la période de recyclage de ces informations : ces dernières sont effet de préférence émises en continu et renouvelées sans interruption.

La réduction qui en résulte de cette période peut être décisive pour une utilisation pratique des systèmes d'information ici considérés.

C'est ainsi qu'une durée d'une minute pour la période de mise à jour des informations à afficher peut être considérée par certains usagers comme rédhibitoire alors qu'au contraire une durée de 10 secondes seulement pour cette période peut être considérée par les mêmes usagers comme tout à fait satisfaisante.

Pour améliorer encore la vitesse de réponse des systèmes d'information considérés, on peut en outre avoir recours avec avantage au perfectionnement suivant : le boîtier portatif comprend des moyens de mémoire suffisamment performants pour enregistrer les données relatives à la totalité de chaque cycle qui précède chaque instant de réception (mémoires du type "First In First Out") ; avec de tels moyens de mémoire, il est possible de retrouver quasi instantanément à chaque instant, parmi les données enregistrées, celles qui correspondent à l'interrogation de l'usager audit instant, et ce sans nécessiter l'attente de la prochaine émission de ces données à partir de l'émetteur 6.

Pour réserver la réception utile des signaux 8 à des boîtiers récepteurs portatifs 10 spécialement autorisés, on peut rendre secrets ces signaux par des chiffrages ou codages appropriés, et faire comprendre auxdits boîtiers des moyens spéciaux propres à décrypter certains au moins des signaux ainsi chiffrés, le décryptage pouvant lui-même être limité aux signaux concernant un seul arrêt du réseau concerné, ou à plusieurs de ces arrêts, ou s'étendant au contraire à la totalité desdits arrêts.

En suite de quoi, et quel que soit le mode de réalisation adopté, on obtient finalement un dispositif permettant d'informer les usagers des autobus sur les temps d'attente de ces autobus, dispositifs dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle est seulement limitée par les revendications.

## Revendications

1. Dispositif pour informer les usagers d'un réseau d'autobus comprenant, d'une part, un ensemble de gestion (3-8) comportant des moyens pour recueillir des données identifiant les positions instantanées des différents autobus (2) qui circulent sur les différentes lignes (a,b...) du réseau, des moyens pour élaborer à partir de ces données des signaux électriques d'information sur lesdites positions et des moyens pour émettre ces signaux par voie électromagnétique, et, d'autre part, une pluralité de récepteurs, dont certains portatifs (10), comprenant chacun des moyens pour recevoir lesdits signaux et sélectionner certains d'entre eux présentant une relation avec un arrêt donné (1) et des moyens, exploitant les signaux ainsi sélectionnés, pour afficher des informations relatives aux temps d'attente des autobus audit arrêt, caractérisé en ce que, d'une part, chacun des signaux électriques d'information émis par voie électromagnétique est affecté à un autobus donné (2) et lié à la distance entre cet autobus et un arrêt (1) de la ligne correspondante et en ce que, d'autre part, les récepteurs portatifs (5) se présentent sous la forme de boîtiers (10) comprenant, d'une part, des moyens d'interrogation (17) actionnables par les usagers, propres à identifier un arrêt donné quelconque (1) du réseau, et d'autre part, des moyens propres à asservir les sélections des signaux électriques ci-dessus à ces interrogations et à alimenter à l'aide des signaux ainsi sélectionnés, successivement, des moyens de calcul (15) des temps d'attente à afficher et les moyens d'affichage (16) de ces temps.

2. Dispositif d'information selon la revendication 1, caractérisé en ce que les signaux émis par voie électromagnétique (8) forment une suite de signaux qui est émise cycliquement et en ce que chaque boîtier portatif (10) comprend des moyens de mémoire qui sont prévus de façon à enregistrer les données relatives au cycle d'émission complet qui précède chaque instant de façon telle que celles, de ces données, qui correspondent à chaque interrogation, puissent être instantanément disponibles dès cette interrogation.

3. Dispositif d'information selon l'une quelconque des précédentes revendications, caractérisé en ce que les signaux émis par voie électromagnétique sont rendus secrets par un chiffrage approprié et en ce que les boîtiers récepteurs portatifs (10) comprennent des moyens pour décrypter certains au moins de ces signaux.

4. Boîtier récepteur portatif compris par un dispositif d'information selon l'une quelconque des précédentes revendications.

## Patentansprüche

1. Anordnung zum Informieren der Benutzer eines Omnibusnetzes, umfassend:
- einerseits eine Steuereinheit (3-8) mit einer Sammeleinrichtung zum Sammeln von Daten, welche die momentanen Positionen der verschiedenen Omnibusse (2) angeben, die auf den verschiedenen Linien (a, b, ...) des Netzes fahren, einer Erzeugungseinrichtung zum Erzeugen von über diese Positionen informierenden elektrischen Informationssignalen anhand dieser Daten und einer Sendeeinrichtung zum Aussenden dieser Signale auf elektromagnetischem Weg und
- andererseits eine Mehrzahl von Empfängern, von denen einige tragbare Empfänger (10) sind und von denen jeder eine Empfangseinrichtung zum Empfangen der Signale und Auswählen gewisser Signale unter diesen, die in einem Zusammenhang mit einer gegebenen Haltestelle (1) stehen, sowie eine die so ausgewählten Signale auswertende Anzeigeeinrichtung zum Anzeigen von Informationen umfaßt, die die Wartezeiten für Omnibusse an der Haltestelle betreffen,
**dadurch gekennzeichnet,** daß zum einen jedes der auf elektromagnetischem Weg ausgesendeten elektrischen Informationssignale einem gegebenen Omnibus (2) zugeordnet ist und an die Entfernung zwischen diesem Omnibus und einer Haltestelle (1) der entsprechenden Linie geknüpft ist und daß zum anderen die tragbaren Empfänger (5) in Form von Boxen (10) vorliegen, welche einerseits eine von den Benutzern betätigbare, zur Angabe einer beliebigen gegebenen Haltestelle (1) des Netzes geeignete Abfrageeinrichtung (17) und andererseits Mittel umfassen, die zur Durchführung der Auswahlen der obigen elektrischen Signale bei diesen Abfragen geeignet sind und dazu geeignet sind, mit Hilfe der so ausgewählten Signale nacheinander eine Berechnungseinrichtung (15) zur Berechnung der anzuzeigenden Wartezeiten und die Anzeigeeinrichtung (16) zum Anzeigen dieser Zeiten zu speisen.

2. Informationsanordnung nach Anspruch 1, dadurch gekennzeichnet, daß die auf elektromagnetischem Weg ausgesendeten Signale (8) eine Signalfolge bilden, die zyklisch ausgesendet wird, und daß jede tragbare Box (10) eine Speichereinrichtung umfaßt, die dazu vorgesehen ist, die einem vollständigen Aussendezyklus, der einem jeweiligen Zeitpunkt vorhergeht, zugehörigen Daten aufzuzeichnen, derart, daß diejenigen dieser Daten, die einer jeweiligen Abfrage entsprechen, unmittelbar von dieser Abfrage ab verfügbar sein können.

3. Informationsanordnung nach einem der vorhergehenden Ansprüche, dadurch gekennzeichnet, daß die auf elektromagnetischem Weg ausgesendeten Signale durch eine geeignete Verschlüsselung geheim gehalten werden und daß die tragbaren Empfängerboxen (10) eine Entschlüsselungseinrichtung zur Entschlüsselung zumindest einiger dieser Signale umfassen.

4. Tragbare Empfängerbox, die in einer Informationsanordnung nach einem der vorhergehenden Ansprüche enthalten ist.

## Claims

1. A system for informing users of a bus network, the system comprising firstly a management facility (3-8) including means for receiving data identifying the instantaneous positions of the various buses (2) travelling over the various lines (a, b, ...) of the network, means for responding to said data by generating electrical information signals concerning said positions, and means for transmitting said signals over an electromagnetic path, and secondly a plurality of receivers, including portable receivers (10), each receiver having means for receiving said signals and for selecting from them those that have a relationship with a given stop (1), and means responding to the signals selected in this way by displaying information relating to the waiting times for buses at said stop, the system being characterized in that firstly each of the electrical information signals transmitted by the electromagnetic path is associated with a given bus (2) and is tied to the distance between said bus and a stop (1) of the corresponding line, and in that, secondly, the portable receivers (5) are in the form of appliances (10) comprising firstly interrogation means (17) suitable for actuation by users and capable of identifying any given stop (1) of the network, and secondly means suitable for causing the above electrical signals to be selected in response to said interrogations and with the help of signals selected in this way successively to operate means (15) for calculating the waiting times to be displayed, and means (16) for displaying said times.

2. An information system according to claim 1, characterized in that the signals emitted via the electromagnetic path (8) form a signal sequence that is transmitted cyclically, and in that each portable appliance (10) includes memory means designed to record the data relating to the complete transmission cycle preceding each instant so that the data corresponding to any particular interrogation can be made available instantly as soon as said interrogation has been performed.

3. An information system according to any preceding claim, characterized in that the signals transmitted by the electromagnetic path are made secret by suitable encrypting and in that the portable receiver appliances (10) include means for decrypting at least some of said signals.

4. A portable receiver appliance included in an information system according to any preceding claim.
